# EUROPEAN PATENT SPECIFICATION

(11) **EP 1 303 079 B1**
(45) Date of publication and mention of the grant of the patent: **03.01.2007**
(21) Application number: 02021812.9
(22) Date of filing: 27.09.2002
(51) Int. Cl.: H04L 12/24

(54) **Central policy based traffic management**
Centrale und regelbasierte Verkehrsverwaltung
Gestion de trafic centrale, basée sur une politique

(30) Priority: 10.10.2001 US 328159 P
(43) Date of publication of application: 16.04.2003
(73) Proprietor: ALCATEL, 75008 Paris (FR)
(72) Inventor: Morgan, David, Salt Lake City, Utah 84124 (US); See, Michael, Chapel Hill, NC 27514 (US); Clawson, Steve, Salt Lake City, Utah 84103 (US)
(74) Representative: Rausch, Gabriele

(56) References cited:
- WO-A-01/29676
- US-A- 6 137 777
- US-A- 6 167 445
- HINRICHS S: "Policy-based management: bridging the gap" COMPUTER SECURITY APPLICATIONS CONFERENCE, 1999. (ACSAC '99). PROCEEDINGS. 15TH ANNUAL PHOENIX, AZ, USA 6-10 DEC. 1999, LOS ALAMITOS, CA, USA,IEEE COMPUT. SOC, US, 6 December 1999 (1999-12-06), pages 209-218, XP010368586 ISBN: 0-7695-0346-2

## Description

### FIELD OF THE INVENTION

The present invention relates generally to traffic control in a data communications network, and more particularly, to configuring different network protocols associated with traffic management via a single centralized set of policies.

### BACKGROUND OF THE INVENTION

Policy based traffic control has become increasingly important in data communication networks as data traffic competes for limited bandwidth. Policy based traffic control generally involves separate, independent interfaces for configuring different traffic management protocols.

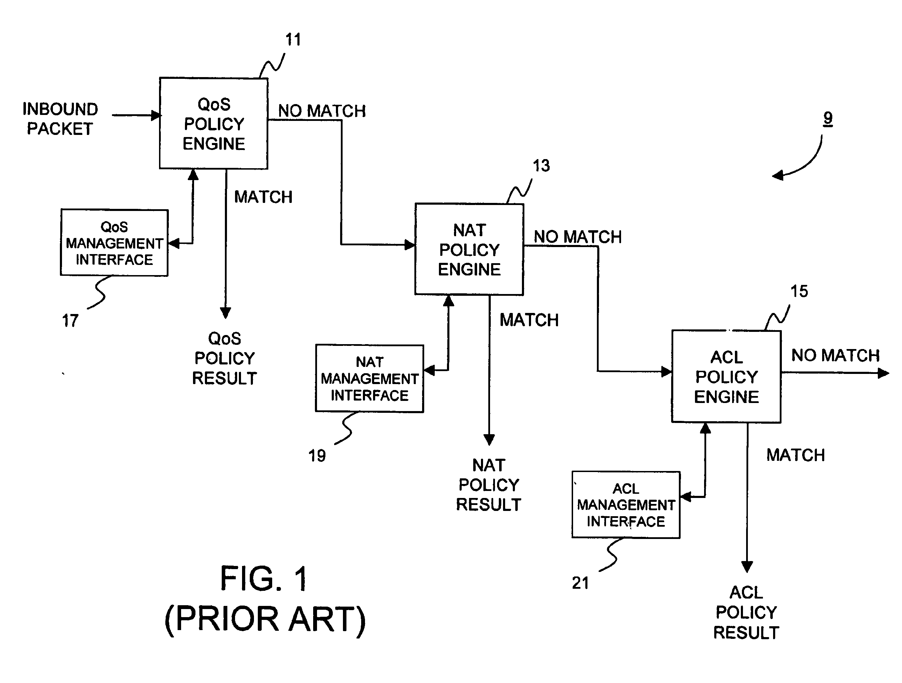

FIG. 1 is a schematic block diagram of a switching node 9 for policy based traffic control according to conventional mechanisms. The switching node includes separate, independent policy engines 11, 13, 15 and associated interfaces 17, 19, 21 for managing and configuring different traffic management protocols. For example, a switching node may include a separate policy engine for controlling quality of service (QoS), IP filtering via access control lists (ACL), network address translation (NAT), and the like. Each policy engine is associated with a control interface used by a network administrator to configure and manage the associated policies for a discrete traffic management protocol.

In general terms, an inbound packet is processed by a first policy engine, such as, a QoS policy engine, for a matching policy. If a match is found, the matching policy is enforced and the packet is generally not processed by the other policy engines. If a match is not found, the packet is processed by a next policy engine for a match. Under existing technology, therefore, multiple actions from different policy engines are either impossible or difficult to perform for a specific traffic flow. It is often desirable, however, to be able to perform such multiple actions. For example, it may be desirable to invoke a NAT policy engine for address translation based on a source IP address while simultaneously invoking the QoS policy engine for assigning a QoS priority to the flow based on the same source address.

Another problem with the described policy based traffic control is that the use of separate, independent interfaces for configuring the policies generally requires the network administrator to learn and use different command sequences for configuring and managing different policy engines. This may result in the configuration of conflicting policy rules that may lead to unpredictable results, especially if the configurations are done by different administrators or the same administrator at different times.

The international application WO 01/29676 Al discloses a switch node comprising the features according to the first part of claim 1. Policy rules for controlling a QoS (Quality of Service) management policy are downloaded from a repository and stored in a cache. Active policy rules are aged-out in response to expiration of a time-to-live value associated with the policy rules.

U.S. Patent 6,167,445 discloses a switching node comprising a repository and a policy translator which stores a set of high-level and device-independent policies for different management protocols. The policy translator translates the high level policies into a set of rules that can be put into effect by specific network devices.

Accordingly, there is a need for a mechanism for providing and applying a common and consistent set of policies to traffic flowing through a data communications network. The mechanism should allow a switching node to enforce a singe policy, with multiple actions in a consistent manner.

### SUMMARY OF THE INVENTION

The present invention is directed to traffic management via a single centralized set of policies. According to one embodiment, the invention is directed to a switching node in a data communications network that includes an input, a repository, a policy engine, and a management engine. The repository stores a single set of policies for controlling a plurality of different traffic management protocols. The policy engine is coupled to the input and the repository, and is configured to evaluate an inbound packet based on a policy selected from the single set of policies, and configure one or more traffic management protocol entities based on the selected policy. The management engine is coupled to the repository and the policy engine. The management engine configures and manages the single set of policies via a common set of commands. The policy engine is configured to generate a new policy for storing in the policy cache if no completely matching policy is found in the repository. Generating the new policy depends on the degree of match between condition fields of the stored policies in the repository and the respective packet data.

The invention is also directed to a method for policy based traffic management where the method includes storing in a repository a single set of policies for controlling a plurality of different traffic management protocols, receiving a packet, and searching a policy cache for a policy applicable to the packet. If the policy cache does not include an applicable policy, the method includes searching the repository for a match, and generating and storing a new policy in the policy cache. The new policy is generated and stored in the cache depending on the degree of match between condition fields of the stored policies in the repository and the respective packet data.

Preferably, the new policy is selected as applicable to a future packet if the repository contains no other policies that are also applicable to a future packet but are different from the new policy.

It should be appreciated, therefore, that the evaluation of traffic via a central policy engine allows the configuration of traffic management protocol entities of different protocol types, such as quality of service, access control, network address translation, and the like, in a consistent and predictable manner. The management of the policies via a common set of commands and the storage of the policies in a central repository help eliminate the creation and application of conflicting policies that could result in unpredictable results.

### BRIEF DESCRIPTION OF THE DRAWINGS

These and other features, aspects and advantages of the present invention will be more fully understood when considered with respect to the following detailed description, appended claims, and accompanying drawings where:
FIG. 1 is a schematic block diagram of a switching node for policy based traffic management according to conventional mechanisms;
FIG. 2 is a schematic block diagram of a network environment including a packet switching node according to one embodiment of the invention;
FIG. 3 is a block diagram of a switching interface in one embodiment of the present invention;
FIG. 4 is a schematic block diagram of the packet switching controller providing and applying a common, centralized set of simple policies for controlling a plurality of traffic management protocols according to one embodiment of the invention;
FIG. 5 is a more detailed diagram of the switching controller of FIG. 4 according to one embodiment of the invention;
FIG. 6 is a conceptual layout diagram of various types of policy objects provided by a central management engine for creating a centralized set of policies according to one embodiment of the invention;
FIG. 7 is a conceptual layout diagram of a central policy repository according to one embodiment of the invention; and
FIG. 8 is a flow diagram of a central policy based traffic management according to one embodiment of the invention.

### DETAILED DESCRIPTION

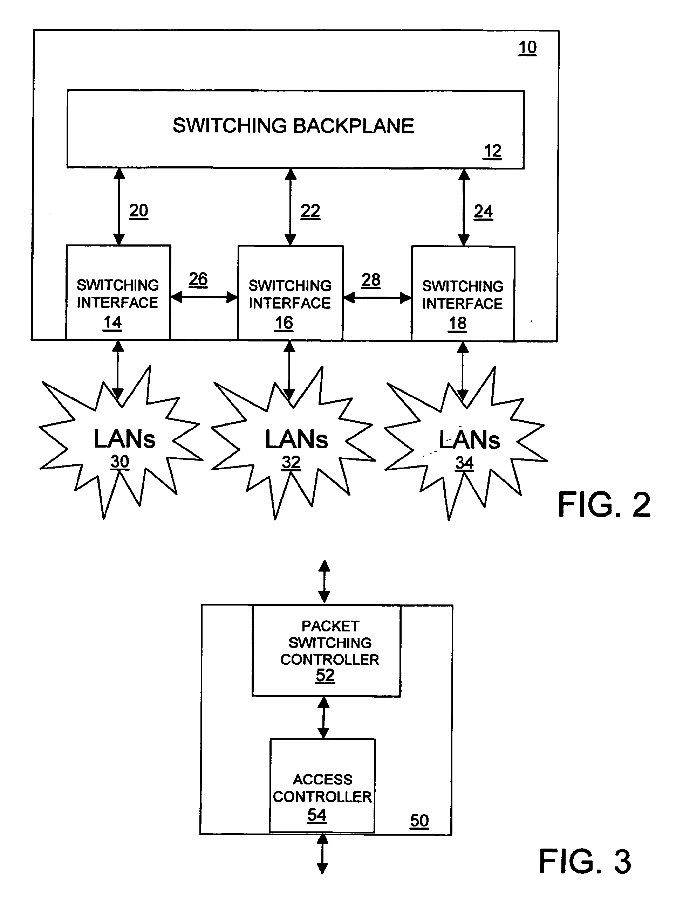

FIG. 2 is a schematic block diagram of a network environment including a packet switching node 10 according to one embodiment of the invention. The packet switching node may also be referred to as a switch, a data communication node or a data communication switch. The packet switching node 10 includes switching interfaces 14, 16 and 18 interconnected to respective groups of LANs 30, 32, 34, and interconnected to one another over data paths 20, 22, 24 via switching backplane 12. The switching backplane 12 preferably includes switching fabric. The switching interfaces may also be coupled to one another over control paths 26 and 28.

The switching interfaces 14, 16, 18 preferably forward packets to and from their respective groups of LANs 30, 32, 34 in accordance with one or more operative communication protocols, such as, for example, media access control (MAC) bridging and Internet Protocol (IP) routing. The switching node 10 is shown for illustrative purposes only. In practice, packet switching nodes may include more or less than three switching interfaces.

FIG. 3 is a block diagram of a switching interface 50 in one embodiment of the present invention. The switching interface 50 may be similar, for example, to the switching interfaces 14, 16, 18 of FIG. 2. The switching interface 50 includes an access controller 54 coupled between LANs and a packet switching controller 52. The access controller 54, which may, for example, include a media access controller (MAC), preferably receives inbound packets off LANs, performs flow-independent physical and MAC layer operations on the inbound packets and transmits the inbound packets to the packet switching controller 52 for flow-dependent processing. The access controller 54 also receives outbound packets from the packet switching controller 52 and transmits the packets on LANs. The access controller 54 may also perform physical and MAC layer operations on the outbound packets prior to transmitting them on LANs.

The packet switching controller 52 receives inbound packets, classifies the packets, modifies the packets in accordance with flow information and transmits the modified packets on switching backplane, such as the switching backplane 12 of FIG. 2. The packet switching controller 52 preferably also receives packets modified by other packet switching controllers via the switching backplane and transmits them to the access controller 54 for forwarding on LANs. The packet switching controller 52 may also subject selected ones of the packets to egress processing prior to transmitting them to the access controller 54 for forwarding on LANs.

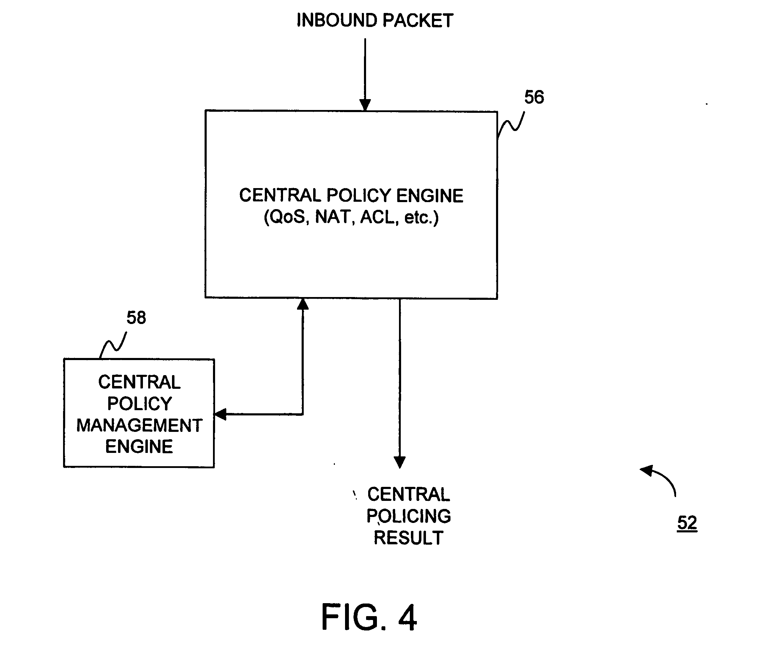

FIG. 4 is a schematic block diagram of the packet switching controller 52 providing and applying a common, centralized set of simple policies for coordinating a plurality of traffic management protocols, such as, for example, access control, address translation, server load balancing, quality of service, and the like. The switching controller 52 includes a central policy engine 56 coupled to a central management engine 58. The central policy engine 56 evaluates the traffic flow against the centralized set of policies to perform, from a central location, one or more policy actions typically performed by separate, independent policy engines. The centralized set of policies include, but are not limited to system policies, network policies, access policies, services policies, and the like. The one or more actions include, but are not limited to packet filtering, packet prioritizing, address translation, server load balance group assignment, and assignment of 802.1p. TOS, or DSCP values.

The central management engine 58 may include software and/or hardware components to enable a network administrator to configure and manage the centralized set of policies. With the central management engine 58, the network administrator may, from a single location and using a common set of commands, create policies that manage different traffic management protocols.

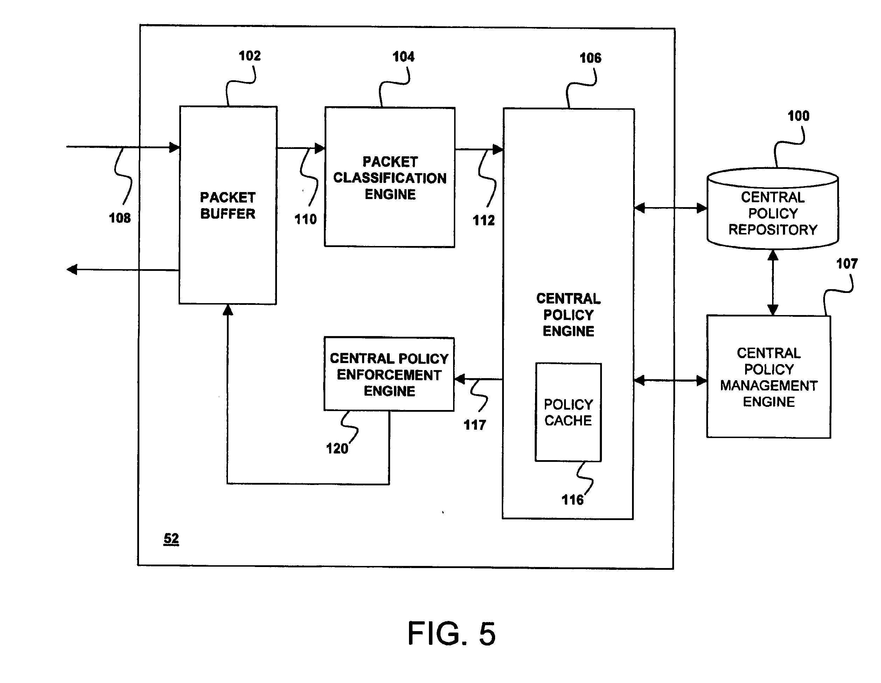

FIG. 5 is a more detailed diagram of the switching controller 52 according to one embodiment of the invention. The switching controller includes a packet buffer 102, packet classification engine 104, central policy engine 106, central policy enforcement engine 120, central policy repository 100, and central management engine 107. The packet classification engine 104, central policy engine 106, central policy enforcement engine 120, and central policy management engine 107 are logical devices that may be implemented in software, hardware, firmware (e.g. ASIC), or any combination thereof. It is understood, of course, that FIG. 5 illustrates a block diagram of the packet switching controller without obfuscating inventive aspects of the present invention with additional elements and/or components that may be required for creating the controller. These additional elements and/or components, which are not shown in FIG. 5 are well known to those skilled in the art.

The switching controller 52 receives inbound packets 108. The packets may include, but are not limited to, Ethernet frames, ATM cells, TCP/IP and/or UDP/IP packets, and may also include other Layer 2 (Data Link/MAC Layer), Layer 3 (Network Layer) or Layer 4 (Transport Layer) data units.

The received packets are stored in the packet buffer 102. The packet buffer 102 provides via output signal 110 the stored packets or portions thereof to the packet classification engine 104 for processing.

The packet classification engine 104 may include one or more of a data extractor and a data cache. In an alternative embodiment, the data extractor and data cache are provided within the packet buffer 102.

The data extractor is used to extract one or more fields from the packets, and to store the extracted fields in the data cache as extracted data. The extracted data may include, but is not limited to, some or all of the packet header. For example, the extracted data may include, but are not limited to, one or more of Layer 2 MAC addresses, 802.1P/Q tag status, Layer 2 encapsulation type, Layer 3 protocol type, Layer 3 addresses, ToS (type of service) values, Layer 4 port numbers, portions of the packet body, and/or any other data used for determining a policy.

The extracted data is transmitted to the central policy engine 106 via an output signal 112. The central policy engine 106 may be similar to the central policy engine 56 of FIG. 4.

The central policy engine 106 accesses either an internal policy cache 116 or the central policy repository 100 for selecting a policy applicable to the packet. In accessing the central policy repository 100, the central policy engine 106 communicates with the repository using protocols such as, for example, LDAP.

According to one embodiment of the invention, the policy cache 116 includes sufficient information for applying policies to existing traffic flows without having to process the entire list of policies in the central policy repository 100 for every packet in the traffic flow. The information in the policy cache 116 is specific enough to prevent packets for which a different applicable rule may exist in the central policy repository 100 to be processed by the policy cache 116.

The central policy repository 100 may be implemented in a local memory and/or an external directory server with Lightweight Directory Access Protocol (LDAP) access. The central policy repository 100 includes a list of policies that are based on the contents of a packet and/or other elements such as, for example, time information, port information, and the like. In general terms, policies are rules composed of one or more conditions that describe a packet and one or more actions defining how the packet is to be processed if the condition is satisfied.

The central policy engine 106 compares the extracted packet data with either the policies in the policy cache 116 or central policy repository 100. If a match is found between the condition(s) in the policy and the extracted data, the policy engine determines the action(s) to be taken on the packet. The action(s) to be taken on the packet are transmitted to the central policy enforcement engine 120 via an output signal 117.

The central policy enforcement engine 120 ensures that the packet is processed according to the parameters defined in the action(s). In this regard, the central policy enforcement engine 120 interacts with other hardware and software elements in the switching node 30 for causing a desired processing of the packet. For example, if the policy actions specify that the packet is to be transmitted at a high priority, the policy enforcement engine 120 may direct the packet buffer 102 to place the packet in a high priority queue of an egress port.

The central management engine 107 of FIG. 5 may be similar to the central management engine 58 of FIG. 4. The engine 107 may be either a dedicated console or part of a network management console. A network administrator accesses the central management engine 107 for configuring and managing the policies in the central policy repository 100 and the central policy engine 106. According to one embodiment, the central management engine 107 provides a graphical user interface that provides a common set of commands and tools for configuring and managing polices that control different network elements such as, for example, QoS, NAT, ACL, and the like. The central management engine 107 also allows a network administrator to test policies before they are applied.

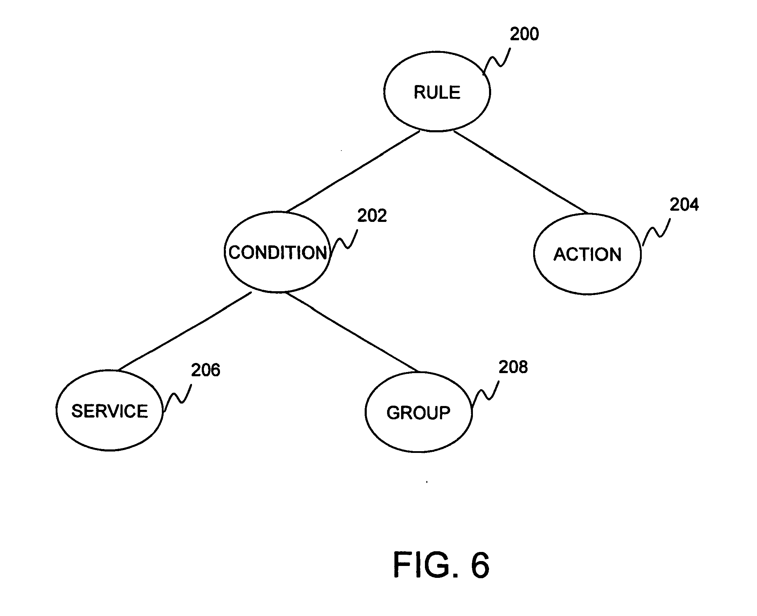

FIG. 6 is a conceptual layout diagram of various types of policy objects provided by the central management engine 107 for creating the centralized set of policies according to one embodiment of the invention. In the illustrated embodiment, the policy objects include rule 200 objects, condition 202 objects, action 204 objects, service 206 objects, and group 208 objects. Rules 200 are top level objects including conditions 202 and actions 204. According to one embodiment, rules are provided precedence values indicative of an order in which the rules are to be applied.

Conditions 202 are parameters used to classify traffic, and actions 204 are parameters describing how to treat the classified traffic. A condition 202 may include a service 206 and/or a group 208. A policy service 206 may be used as a shorthand for certain parts of a condition. According to one embodiment, a policy service 206 is defined by a service name, an IP protocol, a source IP port, and/or a destination IP port. For example, a "video" service may be defined as being associated with a "UDP" protocol and destination IP port number "4500." In another example, a "telnet" service may be defined as being associated with a "TCP" protocol and destination IP port number "23."

A policy group 208 may be defined by a list of IP/MAC addresses, ports, or services. Policy groups allow a network administrator to define conditions for a group of address, ports, or services, instead of creating a separate condition for each address, port, or service. For example, an "engineering" group may be defined as a set of particular IP addresses. A "basic services" group may be defined as a set of particular services such as telnet, FTP, HTTP, and Sendmail.

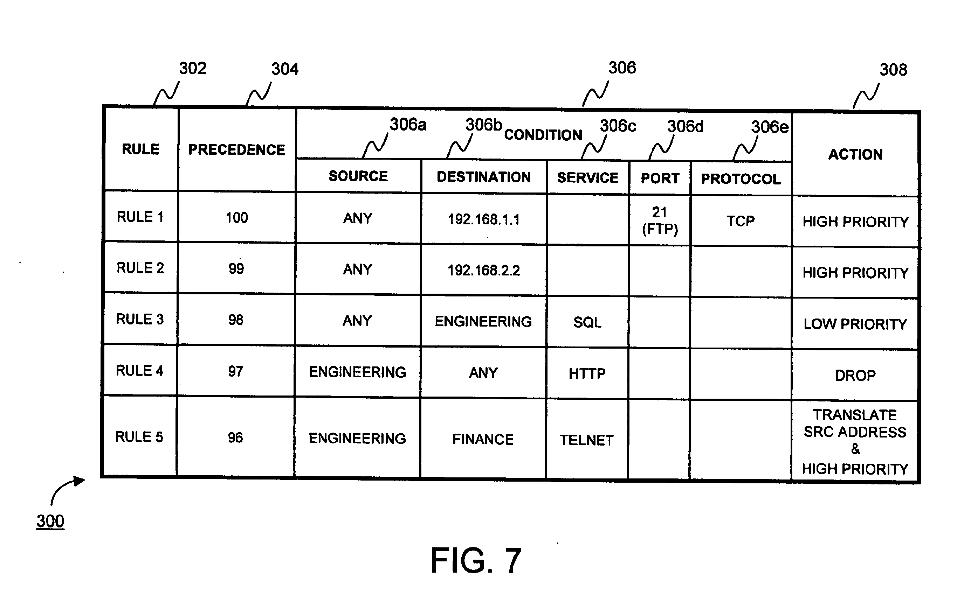

According to one embodiment of the invention, the central management engine 107 allows the creation of policies defining multiple actions for managing different traffic management protocols. For example, a policy in the central policy repository 100 may indicate that traffic with a particular source address and a particular destination address is to have the source address translated and receive a high priority. Thus, two different actions, a NAT policy action and a QoS policy action, may be defined via a single policy rule. FIG. 7 is a conceptual layout diagram of the central policy repository 100 according to one embodiment of the invention. In this illustrated embodiment, the repository includes a policy table 300 including a list of simple policy rules 302. Associated with each policy rule are a precedence number 304, condition 306, and action 308. The precedence number 304 indicates an order in which the rules are to be applied. If traffic matches more than one rule, the central policy engine 106 uses the rule with the highest precedence. In the illustrated embodiment, rule 4 is not matched since it is a subset, or more specific, than the higher precedence rule 2. The precedence ordering of the rules helps eliminate any rule conflicts and ensures that the results of evaluating a traffic flow against the policies is predictable and consistent.

The condition 306 for each rule defines parameters used for classifying inbound packets. These parameters include but are not limited to individual source addresses or source address groups, individual destination addresses or destination groups, and individual IP protocols 306e, individual IP ports 306d, or policy service groups 306c.

The action 308 for each rule defines one or more operations to be performed on the packet and/or traffic management protocol entities. The action 308 may be a filtering action, such as for example, dropping or admitting a packet. The action 308 may also be a QoS action such as, for example, assigning a priority to the packet. The action 308 may further be server load balancing, source or destination address translation, mapping or marking 802.1P, TOS, or DSCP values, or a combination of any of the discussed actions.

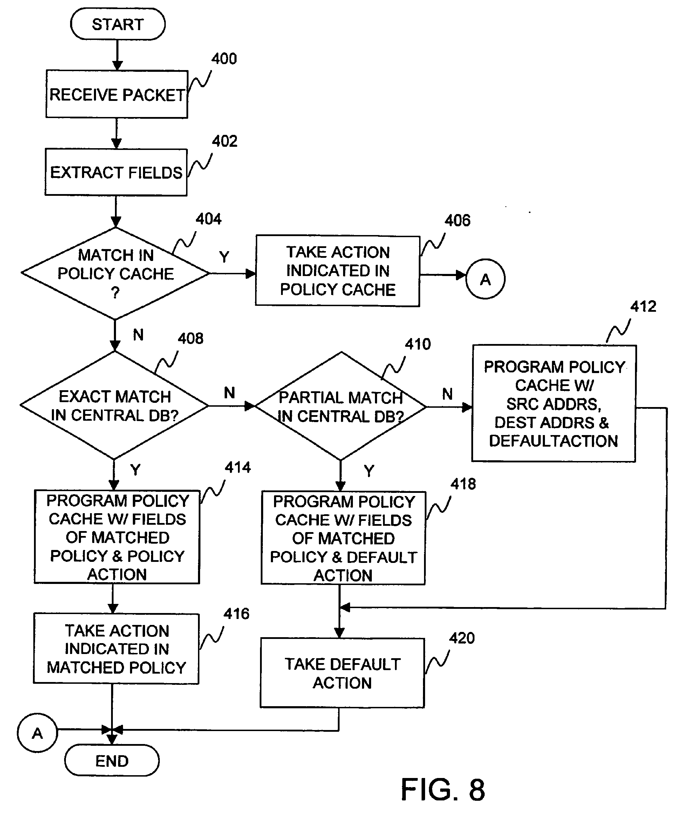

FIG. 8 is a flow diagram of a central policy based traffic control according to one embodiment of the invention. The process starts, and in step 400, the packet buffer 102 receives an inbound data packet and stores the packet in the buffer. In step 402, the packet classification engine 104 extracts one or more fields from the packets. In step 404, the central policy engine 106 determines whether the policy cache contains entries that match the extracted fields of the packet. If the answer in YES, the central policy enforcement engine 120 ensures that the policy action indicated in the matched entry of the policy cache is enforced.

If no match exists in the policy cache 116, the central policy engine 106 determines in step 408 whether there is an exact match of the extracted fields with conditions of a rule in the central policy repository 100. If the answer is YES, the central policy engine proceeds to program, in step 414, the policy cache 116 with the condition fields of the matched policy, the fields having the values of the corresponding extracted fields. This allows future data packets with the same extracted fields to match the newly programmed entry in the policy cache 116, avoiding another search of the central policy repository 100. In step 416, the central policy enforcement engine 120 proceeds to take the policy actions indicated in the matched policy rule.

If there is no exact match of the conditions of a rule in the central policy repository 100, a determination is made in step 410 whether a partial match exists. If the answer is YES, the central policy engine 106 proceeds to program the policy cache 116 in step 418 with the condition fields of the selected policy, the fields having the values of the corresponding extracted fields, and with a default action. In step 420, the central policy enforcement engine 120 proceeds to take the default policy action.

If the search of the central policy repository 100 does not result in even a partial match of the rules, the central policy engine 106 proceeds to program the policy cache 116, in step 412, with minimal information needed to forward the packet. According to one embodiment of the invention, such minimal information is a source address of the packet, a destination address of the packet, and a default policy action. In another embodiment of the invention, the minimal necessary information is simply the destination address and the default policy action. The default policy action is enforced by the central policy enforcement engine 120 in step 420.

The programming of the policy cache 116 will be best understood when considering the following example. Assume that the central policy repository 100 includes the rules depicted in FIG. 7.

A first packet received by the central policy engine 106 includes the following fields extracted by the classification engine 104:
Source IP - 192.200.200.200
Destination IP - 10.5.3.4
Protocol - TCP
Port - 80 (HTTP)

The central policy engine 106 compares the extracted information with entries in the policy cache 116. Assuming for purposes of this example that this is a first packet processed by the central policy engine 106, no entries are contained in the policy cache 116.

The central policy engine 106 then proceeds to search the central policy repository 100 for a match. Upon a finding of no match in the central policy repository 100, the central policy engine programs the policy cache with a minimal amount of information needed to process and forward future similar packets. In one example, the central policy engine may program the policy cache with a source IP address, destination IP address, and a default action. The default action in this example is the assignment of a default priority. The entry placed in the policy cache is as follows:
Source IP - 192.200.200.200
Destination IP - 10.5.3.4
Action - 0 (best effort priority)

The central policy engine 106 next receives a packet that includes the following fields:
Source IP - 192.200.200.200
Destination IP - 192.168.1.1
Protocol - TCP
Port - 80 (HTTP)

The central policy engine 106 compares the extracted information with entries in the policy cache 116. Upon a no match, the extracted information is compared against the rules in the central policy repository 100. Rule 1 matches the packet's source IP address, destination IP address, and protocol. However, there is no match in the port information, resulting in a partial match with rule 1.

In determining an entry for the policy cache, the central policy engine 106 ensures that the entry is specific enough to prevent packets for which a different applicable rule may exist in the central policy repository 100 to be processed by the policy cache. In this regard, the central policy engine 106 determines the number of condition fields of the rule that resulted in the partial match. Rule 1 that resulted in the partial match includes four condition fields: source IP address, destination IP address, protocol and port. Thus, the entry placed in the fast path includes four condition fields although only the source IP and the destination IP are needed to forward future packets. The value of the four fields is based on the information extracted from the packet. Accordingly, the entry placed in the policy cache is as follows:
Source IP - 192.200.200.200
Destination IP - 192.168.1.1
Protocol - TCP
Port - 80 (HTTP)
Action - 0 (best effort priority)

A next packet received by the central policy engine 106 includes the following fields:
Source IP - 192.200.200.200
Destination IP - 192.168.1.1
Protocol - TCP
Port - 21 (FTP)

The central policy engine 106 compares the extracted information with entries in the policy cache 116 and does not find a match. If, however, the policy cache had been programmed with less than four fields in processing the previous packet, a match would have resulted in the policy cache, causing the current packet to the forwarded without consulting the rules in the central policy repository.

The central policy engine 106 proceeds to search the central policy repository 100 and finds an exact match with rule 1. In determining the entry to be programmed in the policy cache, the central policy engine determines the number of condition fields in the rule that resulted in the exact match. The four condition fields of the matching rule 1 are then programmed into the policy cache. The value of the four fields is based on the information extracted from the packet. The entry placed in the policy cache is as follows:
Source IP - 192.200.200.200
Destination IP - 192.168.1.1
Protocol - TCP
Port - 21 (FTP)
Action - 7 (high priority)

The central policy engine 106 next receives a packet that includes the following fields:
Source IP - 192.200.200.200
Destination IP - 192.168.2.2
Protocol - UDP
Port - 300

The central policy engine 106 compares the extracted information with entries in the policy cache 116 and does not find a match. The central policy engine 106 then proceeds to search the rules in the central policy repository 100 and finds an exact match with Rule 2. The fields in Rule 2 that resulted in the exact match are source IP address and destination IP address. Accordingly, the entry placed in the policy cache is as follows:
Source IP - 192.200.200.200
Destination IP - 192.168.2.2
Action - 7 (high priority)

## Claims

1. A switching node for use in a data communications network, the switching node comprising:
- an input for receiving an inbound packet;
- a repository (100) for storing a single set of policies for controlling a traffic management protocol;
- a policy engine (106) coupled to the input and the repository (100), the policy engine (106) being operable to evaluate the packet based on a policy selected from the single set of policies and to configure one or more traffic management protocol entities based on the selected policy;
- a management engine (107) coupled to the repository (100) and the policy engine (106), the management engine (107) being adapted for configuring and managing the single set of policies via a common set of commands; and
- a policy cache (116) coupled to the repository (100) and the policy engine (106) for storing a plurality of cached policies (302);
- wherein the policy engine (106) is configured to evaluate the packet based on the plurality of cached policies prior to evaluating the packet based on the policies in the repository (100); and
- wherein the policy engine (106) is configured to search the repository (100) if the policy cache does not include an applicable policy;
**characterized in that**
- the single set of policies is adapted for controlling a plurality of different traffic management protocols; and
- the policy engine (106) is configured to generate a new policy for storing in the policy cache (116) if no completely matching policy is found in the repository (100), wherein generating the new policy depends on the degree of match between condition fields (306a-306e) of the stored policies (302) in the repository (100) and the respective packet data.

2. The switching node of claim 1, wherein the policy engine (106) is configured such that
- the new policy generated and stored in the policy cache (116) includes a destination address of the packet and a default action (308), if no match of any condition field (306a-306e) of any policy condition (302) and the respective packet data is found in the repository (100);
- the new policy generated and stored in the policy cache (116) includes condition fields of a stored policy in the repository (100) where the values of the condition fields are obtained from the packet, and a default action (308), if at least one of the condition fields (306a-306e), but not all of them, of the stored policy condition (302) and the respective packet data match; and
- the new policy generated and stored in the policy cache includes condition fields (306a-306e) of the policy in the repository (100) where the values of the condition fields are obtained from the packet, and an action (308) indicated by the policy (302) in the repository (100) if all condition fields of the stored policy condition and the respective packet data match.

3. The switching node according to any of the preceding claims, wherein the new policy (302) is selected as applicable to a future packet if the repository (100) contains no other policies that would also be applicable to the future packet but are different from the new policy.

4. The switching node according to any of the preceding claims, wherein the single set of policies includes a policy identifying two or more actions for controlling two or more traffic management protocols.

5. The switching node according to any of the preceding claims, wherein the single set of policies includes a first policy identifying a first action for controlling a first traffic management protocol and a second policy identifying a second action for controlling a second traffic management protocol.

6. The switching node according to any of the preceding claims, wherein one of the traffic management protocols is quality of service.

7. The switching node according to any of the preceding claims, wherein one of the traffic management protocols is access control.

8. The switching node according to any of the preceding claims, wherein one of the traffic management protocols is address translation.

9. A method for policy (302) based traffic management comprising:
- storing in a repository (100) a single set of policies (302) for controlling a traffic management protocol;
- receiving a packet;
- searching a policy cache (116) of a policy engine (106) for a policy (302) applicable to the packet; and
- searching the repository (100) if the policy cache (116) does not include an applicable policy (302); and
- storing the policy (302) from the repository (100) in the policy cache if the policy and the packet match;
**characterized in**
- controlling a plurality of different traffic management protocols by the single set of policies stored in the repository (100); and
- generating a new policy and storing said new policy in the cache (116) depending on the degree of match between condition fields (306a-306e) of the stored policies (302) in the repository (10) and the respective packet data if no completely matching policy is found in the repository (100).

10. The method of claim 9, wherein
- the new policy generated and stored in the policy cache (116) includes a destination address of the packet and a default action, if no match of any condition field (306a-306e) of any policy condition (302) and the respective packet data is found in the repository (100);
- the new policy generated and stored in the policy cache (116) includes condition fields (306a-306e) of a stored policy in the repository (100) where the values of the condition fields are obtained from the packet, and a default action, if at least one of the condition fields, but not all of them, of the stored policy condition and the respective packet data match; and
- the new policy generated and stored in the policy cache (116) includes condition fields of the policy in the repository (100) where the values of the condition fields are obtained from the packet, and an action indicated by the policy in the repository (100) if all condition fields of the stored policy condition and the respective packet data match.

11. The method according to any of the preceding claims 9 or 10, wherein the new policy is selected as applicable to a future packet if the repository (100) contains no other policies that would also be applicable to the future packet but are different from the new policy.

12. The method according to any of the preceding claims 9 - 11, further comprising the steps of:
- receiving a first packet;
- retrieving a first policy from the repository (100), the first policy identifying a first action for configuring a traffic management protocol entity of a first protocol type;
- configuring the traffic management protocol of the first protocol type based on the first action;
- receiving a second packet;
- retrieving a second policy from the repository (100), the second policy identifying a second action for configuring a traffic management protocol entity of a second protocol type; and
- configuring the traffic management protocol entity of the second protocol type based on the second action.

13. The method according to any of the preceding claims 9 - 12, further comprising the steps of:
- retrieving a policy from the repository (100), the policy identifying a first and second action for controlling a first and second traffic management protocol entity, respectively, of a first and second protocol type, respectively;
- configuring the first traffic management protocol entity based on the first action; and
- configuring the second traffic management protocol entity based on the second action.

## Patentansprüche

1. Vermittlungsknoten zur Verwendung in einem Datenkommunikationsnetz, wobei der Vermittlungsknoten umfasst:
- einen Eingang, der ein eingehendes Paket empfängt;
- einen Aufbewahrungsspeicher (100) zum Speichern eines einzelnen Satzes von Verfahrensweisen zum Steuern eines Verkehrsverwaltungsprotokolls;
- eine Verfahrensweisen-Engine (106), die mit dem Eingang und dem Aufbewahrungsspeicher (100) gekoppelt ist, wobei die Verfahrensweisen-Engine (106) betreibbar ist, um das Paket basierend auf einer Verfahrensweise zu beurteilen, die aus dem einzelnen Satz von Verfahrensweisen ausgewählt ist, und eine oder mehrere Verkehrsverwaltungsprotokoll-Entitäten basierend auf der ausgewählten Verfahrensweise zu konfigurieren;
- eine Verwaltungs-Engine (107), die mit dem Aufbewahrungsspeicher (100) und der Verfahrensweisen-Engine (106) gekoppelt ist, wobei die Verwaltungs-Engine (107) zum Konfigurieren und Verwalten des einzelnen Satzes von Verfahrensweisen über einen gemeinsamen Satz von Befehlen ausgelegt ist, und
- einen Verfahrensweisen-Cachespeicher (116), der mit dem Aufbewahrungsspeicher (100) und der Verfahrensweisen-Engine (106) zum Speichern mehrerer im Cachespeicher erfasster Verfahrensweisen (302) gekoppelt ist;
- wobei die Verfahrensweisen-Engine (106) konfiguriert ist, vor dem Beurteilen des Pakets, das auf den Verfahrensweisen im Aufbewahrungsspeicher (100) basiert, das Paket basierend auf den mehreren im Cachespeicher erfassten Verfahrensweisen zu beurteilen; und
- wobei die Verfahrensweisen-Engine (106) konfiguriert ist, den Aufbewahrungsspeicher (100) zu durchsuchen, wenn der Verfahrensweisen-Cachespeicher keine anwendbare Verfahrensweise beinhaltet;
**dadurch gekennzeichnet, dass**
- der einzelnen Satz von Verfahrensweisen zum Steuern mehrerer unterschiedlicher Verkehrsverwaltungsprotokolle ausgelegt ist und
- die Verfahrensweisen-Engine (106) konfiguriert ist, eine neue Verfahrensweise zum Speichern im Verfahrensweisen-Cachespeicher (116) zu generieren, wenn im Aufbewahrungsspeicher (100) keine vollständig übereinstimmende Verfahrensweise gefunden wird, wobei das Generieren der neuen Verfahrensweise vom Grad der Übereinstimmung zwischen Bedingungsfeldern (306a-306e) der gespeicherten Verfahrensweisen (302) im Aufbewahrungsspeicher (100) und den jeweiligen Paketdaten abhängt.

2. Vermittlungsknoten nach Anspruch 1, wobei die Verfahrensweisen-Engine (106) derart konfiguriert ist, dass
- die neue Verfahrensweise, die generiert und im Verfahrensweisen-Cachespeicher (116) gespeichert ist, eine Zieladresse des Pakets und eine Standardaktion (308) beinhaltet, wenn im Aufbewahrungsspeicher (100) keine Übereinstimmung irgendeines Bedingungsfeldes (306a-306e) irgendeiner Verfahrensweisen-Bedingung (302) und der jeweiligen Paketdaten gefunden wird;
- die neue Verfahrensweise, die generiert und im Verfahrensweisen-Cachespeicher (116) gespeichert ist, Bedingungsfelder einer gespeicherten Verfahrensweise im Aufbewahrungsspeicher (100), wobei die Werte der Bedingungsfelder aus dem Paket gewonnen werden, und eine Standardaktion (308) beinhaltet, wenn mindestens eines der Bedingungsfelder (306a-306e), aber nicht alle von ihnen, der gespeicherten Verfahrensweisen-Bedingung (302) und die jeweiligen Paketdaten übereinstimmen; und
- die neue Verfahrensweise, die generiert und im Verfahrensweisen-Cachespeicher gespeichert ist, Bedingungsfelder (306a-306e) der Verfahrensweise im Aufbewahrungsspeicher (100), wobei die Werte der Bedingungsfelder aus dem Paket gewonnen werden, und eine Aktion (308) beinhaltet, die durch die Verfahrensweise (302) im Aufbewahrungsspeicher (100) angegeben ist, wenn alle Bedingungsfelder der gespeicherten Verfahrensweisen-Bedingung und die jeweiligen Paketdaten übereinstimmen.

3. Vermittlungsknoten nach einem der vorhergehenden Ansprüche, wobei die neue Verfahrensweise (302) als auf ein zukünftiges Paket anwendbar ausgewählt wird, wenn der Aufbewahrungsspeicher (100) keine anderen Verfahrensweisen enthält, die auch auf ein zukünftiges Paket anwendbar sein würden, aber von der neuen Verfahrensweise verschieden sind.

4. Vermittlungsknoten nach einem der vorhergehenden Ansprüche, wobei der einzelne Satz von Verfahrensweisen eine Verfahrensweise beinhaltet, die zwei oder mehr Aktionen zum Steuern zweier oder mehrerer Verkehrsverwaltungsprotokolle identifiziert.

5. Vermittlungsknoten nach einem der vorhergehenden Ansprüche, wobei der einzelne Satz von Verfahrensweisen eine erste Verfahrensweise, die eine erste Aktion zum Steuern eines ersten Verkehrsverwaltungsprotokolls identifiziert, und eine zweite Verfahrensweise beinhaltet, die eine zweite Aktion zum Steuern eines zweiten Verkehrsverwaltungsprotokolls identifiziert.

6. Vermittlungsknoten nach einem der vorhergehenden Ansprüche, wobei eines der Verkehrsverwaltungsprotokolle Dienstgüte ist.

7. Vermittlungsknoten nach einem der vorhergehenden Ansprüche, wobei eines der Verkehrsverwaltungsprotokolle Zugriffskontrolle ist.

8. Vermittlungsknoten nach einem der vorhergehenden Ansprüche, wobei eines der Verkehrsverwaltungsprotokolle Adressenumsetzung ist.

9. Verfahren zur verfahrensweisenbasierten (302) Verkehrsverwaltung, umfassend:
- Speichern eines einzelnen Satzes von Verfahrensweisen (302) zum Steuern eines Verkehrsverwaltungsprotokolls in einem Aufbewahrungsspeicher (100);
- Empfangen eines Pakets;
- Durchsuchen eines verfahrensweisen-Cachespeichers (116) einer Verfahrensweisen-Engine (106) nach einer Verfahrensweise (302), die auf das Paket anwendbar ist; und
- Durchsuchen des Aufbewahrungsspeichers (100), wenn der Verfahrensweisen-Cachespeicher (116) keine anwendbare Verfahrensweise (302) beinhaltet; und
- Speichern der Verfahrensweise (302) aus dem Aufbewahrungsspeicher (100) im Verfahrensweisen-Cachespeicher, wenn die Verfahrensweise und das Paket übereinstimmen;
**gekennzeichnet durch**
- Steuern mehrerer unterschiedlicher Verwaltungsprotokolle durch den einzelnen Satz von Verfahrensweisen, der im Aufbewahrungsspeicher (100) gespeichert ist; und
- Generieren einer neuen Verfahrensweise und Speichern der neuen Verfahrensweise im Cachespeicher (116) abhängig vom Grad der Übereinstimmung zwischen Bedingungsfeldern (306a-306e) der gespeicherten Verfahrensweisen (302) im Aufbewahrungsspeicher (100) und der jeweiligen Paketdaten, wenn keine vollständig übereinstimmende Verfahrensweise im Aufbewahrungsspeicher (100) gefunden wird.

10. Verfahren nach Anspruch 9, wobei
- die neue Verfahrensweise, die generiert und im Verfahrensweisen-Cachespeicher (116) gespeichert ist, eine Zieladresse des Pakets und eine Standardaktion beinhaltet, wenn im Aufbewahrungsspeicher (100) keine Übereinstimmung irgendeines Bedingungsfeldes (306a-306e) irgendeiner Verfahrensweisen-Bedingung (302) und der jeweiligen Paketdaten gefunden wird;
- die neue Verfahrensweise, die generiert und im Verfahrensweisen-Cachespeicher (116) gespeichert ist, Bedingungsfelder (306a-306e) einer gespeicherten Verfahrensweise im Aufbewahrungsspeicher (100), wobei die Werte der Bedingungsfelder aus dem Paket gewonnen werden, und eine Standardaktion beinhaltet, wenn mindestens eines der Bedingungsfelder, aber nicht alle von ihnen, der gespeicherten Verfahrensweisen-Bedingung und die jeweiligen Paketdaten übereinstimmen; und
- die neue Verfahrensweise, die generiert und im Verfahrensweisen-Cachespeicher (116) gespeichert ist, Bedingungsfelder der Verfahrensweise im Aufbewahrungsspeicher (100), wobei die Werte der Bedingungsfelder aus dem Paket gewonnen werden, und eine Aktion beinhaltet, die durch die Verfahrensweise im Aufbewahrungsspeicher (100) angegeben ist, wenn alle Bedingungsfelder der gespeicherten Verfahrensweisen-Bedingung und die jeweiligen Paketdaten übereinstimmen.

11. Verfahren nach einem der vorhergehenden Ansprüche 9 oder 10, wobei die neue Verfahrensweise als auf ein zukünftiges Paket anwendbar ausgewählt wird, wenn der Aufbewahrungsspeicher (100) keine anderen Verfahrensweisen enthält, die auch auf ein zukünftiges Paket anwendbar sein würden, aber von der neuen Verfahrensweise verschieden sind.

12. Verfahren nach einem der vorhergehenden Ansprüche 9 - 11, das ferner die folgenden Schritte umfasst:
- Empfangen eines ersten Pakets;
- Abrufen einer ersten Verfahrensweise aus dem Aufbewahrungsspeicher (100), wobei die erste Verfahrensweise eine erste Aktion zum Konfigurieren einer Verkehrsverwaltungsprotokoll-Entität eines ersten Protokolltyps identifiziert;
- Konfigurieren des Verkehrsverwaltungsprotokolls des ersten Protokolltyps basierend auf der ersten Aktion;
- Empfangen eines zweiten Pakets;
- Abrufen einer zweiten Verfahrensweise aus dem Aufbewahrungsspeicher (100), wobei die zweite Verfahrensweise eine zweite Aktion zum Konfigurieren einer Verkehrsverwaltungsprotokoll-Entität eines zweiten Protokolltyps identifiziert; und
- Konfigurieren der Verkehrsverwaltungsprotokoll-Entität des zweiten Protokolltyps basierend auf der zweiten Aktion.

13. Verfahren nach einem der vorhergehenden Ansprüche 9 - 12, das ferner die folgenden Schritte umfasst:
- Abrufen einer Verfahrensweise aus dem Aufbewahrungsspeicher (100), wobei die Verfahrensweise eine erste und zweite Aktion zum Steuern einer ersten bzw. zweiten Verkehrsverwaltungsprotokoll-Entität eines ersten bzw. zweiten Protokolltyps identifiziert;
- Konfigurieren der ersten Verkehrsverwaltungsprotokoll-Entität basierend auf der ersten Aktion und
- Konfigurieren der zweiten Verkehrsverwaltungsprotokoll-Entität basierend auf der zweiten Aktion.

## Revendications

1. Noeud de commutation destiné à être utilisé dans un réseau de communications, le noeud de commutation Comprenant :
- une entrée destinée à recevoir un paquet entrant ;
- un répertoire (100) destiné à stocker un ensemble unique de politiques pour contrôler un protocole de gestion de trafic ;
- un moteur de politique (106) couplé à l'entrée et au répertoire (100), le moteur de politique (106) pouvant être exploité pour évaluer le paquet en fonction d'une politique sélectionnée à partir de l'ensemble unique de politiques et pour configurer une ou plusieurs entités de protocole de gestion de trafic en fonction de la politique sélectionnée;
- un moteur de gestion (107) couplé au répertoire (100) et au moteur de politique (106), le moteur de gestion (107) étant adapté pour configurer et gérer l'ensemble unique de politiques par l'intermédiaire d'un ensemble commun de commandes ; et
- une cache de politique (116) couplée au répertoire (100) et au moteur de politique (106) pour stocker une pluralité de politiques mises en mémoire cache (302) ;
- dans lequel le moteur de politique (106) est configuré pour évaluer le paquet en fonction de la pluralité de politiques mises en mémoire cache avant d'évaluer le paquet en fonction des politiques dans le répertoire (100) ; et
- dans lequel le moteur de politique (106) est configuré pour rechercher dans le répertoire (100) si la cache de politique ne comprend pas une politique applicable ;
**caractérisé en ce que**
- l'ensemble unique de politiques est adapté pour contrôler une pluralité de protocoles de gestion de trafic différents ; et
- le moteur de politique (106) est configuré pour générer une nouvelle politique pour stocker dans la cache de politique (116) si aucune politique totalement exacte n'est trouvée dans le répertoire (100), dans lequel la génération de la nouvelle politique dépend du degré de correspondance entre les champs de condition (306a-306e) des politiques stockées (302) dans le répertoire (100) et des données de paquets respectives,

2. Noeud de commutation selon la revendication 1, dans lequel le moteur de politique (106) est configuré de sorte que
- la nouvelle politique générée et stockée dans la cache de politique (116) comprend une adresse de destination du paquet une action par défaut (308), si aucune correspondance d'un quelconque champ de condition (306a-306e) d'une quelconque condition de politique (302) et des données de paquet correspondantes n'est trouvée dans le répertoire (100) ;
- la nouvelle politique générée et stockée dans la cache de politique (116) comprend des champs de condition d'une politique stockée dans le répertoire (100) où les valeurs des champs de condition sont obtenues à partir du paquet, et une action par défaut (308), si au moins un des champs de condition (306a-306e), mais pas tous, de la condition de politique stockée (302) et les données de paquet respectives sont en correspondance ; et
- la nouvelle politique générée et stockée dans la cache de politique comprend des champs de condition (306a-306e) de la politique dans le répertoire (100) où les valeurs des champs de condition sont obtenues à partir du paquet, et une action (308) indiquée par la politique (302) dans le répertoire (100) si tous les champs de condition de la condition de politique stockée et les données de paquet respectives sont en correspondance.

3. Noeud de commutation selon l'une quelconque des revendications précédentes, dans lequel la nouvelle politique (302) est sélectionnée comme étant applicable à un paquet futur si le répertoire (100) ne contient pas d'autres politiques qui puissent également être applicables au futur paquet mais qui soient différentes de la nouvelle politique.

4. Noeud de commutation selon l'une quelconque des revendications précédentes, dans lequel l'ensemble unique de politiques comprend une politique identifiant deux actions ou plus pour contrôler deux protocoles de gestion de trafic ou plus,

5. Noeud de commutation selon l'une quelconque des revendications précédentes, dans lequel l'ensemble unique de politiques comprend une première politique identifiant une première action pour contrôler un premier protocole de gestion de trafic et une deuxième politique identifiant une deuxième action pour contrôler un deuxième protocole de gestion de trafic.

6. Noeud de commutation selon l'une quelconque des revendications précédentes, dans lequel un des protocoles de gestion de trafic est la qualité de service.

7. Noeud de commutation selon l'une quelconque des revendications précédentes, dans lequel un des protocoles de gestion de trafic est le contrôle d'accès.

8. Noeud de commutation selon l'une quelconque des revendications précédentes, dans lequel un des protocoles de gestion de trafic est la traduction d'adresse.

9. Procédé de gestion de trafic basé sur une politique (302) comprenant les étapes consistant à :
- stocker dans un répertoire (100) un ensemble unique de politiques (302° pour contrôler un protocole de gestion de trafic;
- recevoir un paquet;
- rechercher dans une cache de politique (116) d'un moteur de politique (106) une politique (302) applicable au paquet et
- rechercher dans le répertoire (100) si la cache de politique (116) ne comprend pas une politique applicable (302); et
- stocker la politique (302) provenant du répertoire (100) dans la cache de politique si la politique et le paquet correspondent;
**caractérisé par** les étapes consistant à
- contrôler une pluralité de protocoles de gestion de trafic différents par l'ensemble unique de politiques stocké dans le répertoire (100) ; et
- générer une nouvelle politique et stocker ladite nouvelle politique dans la cache (116) selon le degré de correspondance entre les champs de condition (306a-306e) des politiques stockées (302) dans le répertoire (10) et les données de paquet respectives si aucune politique correspondant totalement n'est trouvée dans le répertoire (100).

10. Procédé selon la revendication 9, dans lequel:
- la nouvelle politique générée et stockée dans la cache de politique (116) comprend une adresse de destination du paquet et une action par défaut, si aucune correspondance d'un quelconque champ de condition (306a-306e) d'une quelconque condition de politique (302) et des données de paquets respectives n'est trouvée dans le répertoire (100) ;
- la nouvelle politique générée et stockée dans la cache de politique (116) comprend des champs de condition (306a-306e) d'une politique stockée dans le répertoire (100) où les valeurs des champs de condition sont obtenues à partir du paquet, et une action par défaut, si au moins un des champs de condition, mais pas tous, de la condition de politique stockée et les données de paquet respectives correspondent ; et
- la nouvelle politique générée et stockée dans la cache de politique (116) comprend des champs de condition de la politique dans le répertoire (100) où les valeurs des champs de condition sont obtenues à partir du paquet, et une action indiquée par la politique dans le répertoire (100) si tous les champs de condition de la condition de politique stockée et les données de paquet respectives correspondent.

11. Procédé selon l'une quelconque des revendications précédentes 9 ou 10, dans lequel la nouvelle politique est sélectionnée comme étant applicable à un futur paquet si le répertoire (100) ne contient aucune autre politique qui soit également applicable au futur paquet mais soit différente de la nouvelle politique.

12. Procédé selon l'une quelconque des revendications précédentes 9 à 11, comprenant en outre les étapes consistant à:
- recevoir un premier paquet ;
- extraire une première politique du répertoire (100), la première politique identifiant une première action pour configurer une entité de protocole de gestion de trafic d'un premier type de protocole ;
- configurer le protocole de gestion de trafic du premier type de protocole en fonction de la première action ;
- recevoir un deuxième paquet ;
- extraire une deuxième politique du répertoire (100), la deuxième politique identifiant une deuxième action pour configurer une entité de protocole de gestion de trafic d'un deuxième type de protocole ; et
- configurer l'entité de protocole de gestion de trafic du deuxième type de protocole en fonction de la deuxième action.

13. Procédé selon l'une quelconque des revendications 9 à 12, comprenant en outre les étapes consistant à :
- extraire une politique du répertoire (100), la politique identifiant des première et deuxième actions pour contrôler des première et deuxième entités de protocole de gestion de trafic, respectivement, de premier et deuxième types de protocole, respectivement ;
- configurer la première entité de protocole de gestion de trafic en fonction de la première action ; et
- configurer la deuxième entité de protocole de gestion de trafic en fonction de la deuxième action.
